# EUROPEAN PATENT APPLICATION

(11) **EP 2 090 981 A1**
(43) Date of publication of application: **19.08.2009**
(21) Application number: 09152772.1
(22) Date of filing: 13.02.2009
(51) Int. Cl.: G06F 9/445

(54) **Software management system and method**

(30) Priority: 14.02.2008 AU 2008900691
(71) Applicant: Aristocrat Technologies Australia Pty, Ltd, North Ryde, New South Wales AU-2113 (AU)
(72) Inventor: Andersson, Hakan, 17264 Sundbyberg (SE)
(74) Representative: Ketelaars, Maarten F.J.M.

(57) **Abstract**

A software maintenance system for managing a software distribution system for distributing a software package to one or more target machines is described. The software distribution system comprises a plurality of software distribution parts. At least one of the software distribution parts is provided at each target machine for receiving the software package. The software management system comprises a software maintenance server for receiving a software package for updating one or more target machines and at least one software maintenance unit for each software distribution part. The software maintenance server is configured to: define at least target machines for download of the software package and provide the software package to the software distribution system. Each software maintenance unit for each software distribution part is for acting as an interface between the software maintenance server and each software distribution part. Each software maintenance unit is configured to control the respective software distribution part to achieve distribution of the software package to each target machine via the respective software distribution part.

## Description

### Field of the Invention

The present invention relates to management of software downloading to one or more node machines in a networked computer system.

### Background

In a networked computer system, such as a client-server based gaming system, software, such as game software for running a game on the gaming system, often comprises of a number of components. These components are often grouped into modules, such as for example a server module, a client module and a configuration record for a central database. There may also be further software components dedicated to different node machines in the system, for example a module for a site operator terminal. To complete the installation of software or an update to the software the different components have to be distributed to and successfully installed on each respective target machine.

Moreover, the structure of the software may be such that some parts of the software code are reused, such as for use in different games. For example, a poker game and a black jack game may use a common piece of software code for the respective client modules. This means that the installation and the un-installation of software require careful tracking of the different pieces of software code.

Altogether, the software and its distribution to selected node machines in the computer system can be complex and a detailed knowledge of the structure of the game software is required to manage its downloading and installation. There are commercially available software products for distribution of software to different node machines in a computer system network, for example the product *Openview Configuration Management* from Hewlett Packard or *Tivoli* from IBM. However, it has been found that these products to a large extent have to be manually handled and require complex configuration to achieve a correct distribution of the different components and the different subordinate pieces of software.

The required manual handling in connection with download does not always render an acceptable level of performance, and for this reason there is a need to make the download process more automatic.

### Summary of the Present Invention.

According to a first aspect of the present invention there is provided a software maintenance system for managing a software distribution system for distributing a software package to one or more target machines, the software distribution system comprising a plurality of software distribution parts, wherein at least one of the software distribution parts is provided at each target machine for receiving the software package, the software management system comprising:
a software maintenance server for receiving a software package for updating one or more target machines, the software maintenance server configured to:
   define at least target machines for download of the software package; and
   provide the software package to the software distribution system; and
      at least one software maintenance unit for each software distribution part for acting as an interface between the software maintenance server and each software distribution part, each software maintenance unit configured to control the respective software distribution part to achieve distribution of the software package to each target machine via the respective software distribution part.

In an embodiment the software package comprises one or more software components.

In an embodiment the software maintenance server is configured to define the content of the software package in respect to one or more of the target machines.

In an embodiment each software maintenance unit is configured to manage installing of the components of the downloaded software package at the respective target machine.

In an embodiment the software maintenance server configured to monitor the progress of the distribution of the software package by the software distribution system.

In an embodiment the software maintenance server configured to:
define a plurality of tasks for the software distribution system to undertake so as to distribute and install the software package to the defined target machines; and
control the software distribution system to undertake the plurality of tasks so as to achieve distribution and installation of the software package to each target machine.

According to a second aspect of the present invention there is provided a software management system comprising:
a software distribution system for distributing a software package to one or more target machines, the software distribution system comprising a plurality of software distribution parts, wherein at least one of the software distribution parts is provided at each target machine for receiving the software package;
a software maintenance server for receiving a software package for updating one or more target machines, the software maintenance server configured to:
   define at least one target machine for download of the software package; and
   provide the software package to the software distribution system; and
      at least one software maintenance unit for each software distribution part for acting as an interface between the software maintenance server and each software distribution part, each software maintenance unit configured to control the respective software distribution part to achieve distribution of the software package to each target machine via the respective software distribution part.

In an embodiment the parts of the software distribution system comprise:
a software distribution server for distributing one or more components of a software package to one or more target machines; and
at least one software distribution client at each target machine for managing receipt of software package components from the software distribution server.

In an embodiment the software maintenance server is configured to provide the software package to the software distribution server for distribution to one or more software distribution clients according to the defined target machines under the control of the respective software maintenance units.

According to a third aspect of the present invention there is provided a method of distributing a software package comprising a plurality of software components to one or more target machines comprising:
receiving a software package for updating one or more target machines;
defining at least target machines for download of the software package with a software maintenance system;
providing the software package to a software distribution system comprised of a plurality of parts,
   wherein each part is used by one of a plurality of potential target machines for downloading of a given software package to the respective machine;
controlling selected software distribution system parts with the software maintenance system to download the software package to a required one or more target machines.

In an embodiment method further comprises:
defining a plurality of tasks for the software distribution system to undertake so as to distribute and install the software package to the defined target machines with the software maintenance system; and
controlling the software distribution system parts with the software maintenance system to undertake the plurality of tasks so as to achieve distribution and installation of the software package to each target machine.

In an embodiment there is a software maintenance unit corresponding to each of the selected software distribution system parts and each software maintenance unit interfaces a software maintenance server to each software distribution part so as to control each software distribution part to achieve distribution of the software package to each target machine.

According to a fourth aspect of the present invention there is provided logic embodied in a machine readable form comprising instructions to control a machine or machines to operate as a software maintenance system for managing a software distribution system for distributing a software package to one or more target machines, the software distribution system comprising a plurality of software distribution parts, wherein at least one of the software distribution parts is provided at each target machine for receiving the software package, the software maintenance system comprising:
a software maintenance server for receiving a software package for updating one or more target machines, the software maintenance server is configured to:
   define at least target machines for download of the software package; and
   provide the software package to the software distribution system; and
      at least one software maintenance unit for each software distribution part for acting as an interface between the software maintenance server and each software distribution part, each software maintenance unit configured to control the respective software distribution part to achieve distribution of the software package to each target machines via the respective software distribution part.

According to a fifth aspect of the present invention there is provided logic embodied in a machine readable form comprising instructions to control a machine or machines to:
receive a software package for updating one or more target machines;
define at least target machines for download of the software package with a software maintenance system;
provide the tasks and software package to a software distribution system comprised of a plurality of parts,
   wherein each part is used by one of a plurality of potential target machines for downloading of a given software package to the respective machine;
control selected software distribution system parts with the software maintenance system to download the software package to a required one or more target machines.

In an embodiment the logic is in the form of a computer program.

In an embodiment the logic is in the form of a data signal.

According to a sixth aspect of the present invention there is provided a software maintenance server for managing a software distribution system for distributing a software package to one or more target machines, the software distribution system comprising a plurality of software distribution parts, wherein at least one of the software distribution parts is provided at each target machine for receiving the software package, the software management server comprising:
an interface for receiving a software package for updating one or more target machines, defining at least target machines for download of the software package, providing the software package to the software distribution system and communicating with each software distribution part through at least one software maintenance unit;
a controller for controlling each software maintenance unit to in turn control the respective software distribution part to achieve distribution of the software package to a respective one of the one or more target machines via the respective software distribution part.

According to a seventh aspect of the present invention there is provided a maintenance unit for controlling parts of a software distribution system for distributing a software package to one or more target machines, wherein at least one of the software distribution parts is provided at each target machine for receiving the software package, the software management unit being implemented on a target machine and comprising:
a controller arranged to control a respective one of the software distribution parts;
an interface to a software maintenance server and the software distribution part;
wherein the controller is configured to be controlled by the software maintenance server so as to in turn control the software distribution part to achieve distribution of a software package to the target machine using the software distribution part to receive the software package at the target machine under the control of the software maintenance server.

### Brief Description of the Drawings

The present invention will now be described, by way of example only, with reference to the accompanying drawings, in which:
Figure 1 is a diagrammatic block diagram of a gaming system in accordance with an embodiment of the present invention;
Figure 2 is a diagrammatic representation of a gaming system in accordance with an embodiment of the present invention with the gaming system implemented in the form of a stand alone gaming machine;
Figure 3 is a schematic block diagram of operative components of the gaming machine shown in Figure 2;
Figure 4 is a schematic block diagram of components of a memory of the gaming machine shown in Figure 2;
Figure 5 is a schematic diagram of a gaming system in accordance with an alternative embodiment of the present invention with the gaming system implemented over a network;
Figure 5A is a schematic block diagram of a client/server based gaming system in accordance with a further alternative embodiment of the present invention;
Figure 6 is a schematic block diagram of a gaming system having a software management system according to an embodiment of the present invention;
Figure 7 is a flow diagram illustrating a method of maintaining software according to an embodiment of the present invention;
Figure 8 is a flow diagram illustrating a method of downloading software to a machine according to the method of Figure 7;
Figure 9 is a flow diagram illustrating a method of installing software onto a machine according to the method of Figure 7;
Figure 10 is a schematic block diagram of an embodiment of a software maintenance system, including a software maintenance server; and
Figure 11 is a schematic block diagram of an embodiment of a software maintenance system, including a software maintenance unit.

### Description of Embodiments of the Invention

### Overview

An embodiment of the software management system of the present invention comprises a software maintenance server for defining tasks for controlling a software distribution system which downloads software or updates to the software from a network source to a target machine. The software management system also comprises at least one software maintenance unit operable on the target machine for managing the downloading of the software/update to the target machine. The software maintenance server controls the software maintenance unit which in turn controls a software distribution part to operate as a client of the software distribution system. The software maintenance unit causes the software distribution client to download the software/update to the target machine and to preferably manage installation of downloaded software on the target machine.

Referring to the drawings, there is shown a gaming system arranged to implement a probabilistic wagering game wherein a player wagers a bet amount and a prize is allocated to the player depending on a game result.

An embodiment of game implemented by the gaming system operates such that a player places a bet on a game outcome and will be awarded a prize according to the result of the game and in some embodiments according to the amount wagered. The outcome of the game is determined according to the rules of the specific implementation of the game.

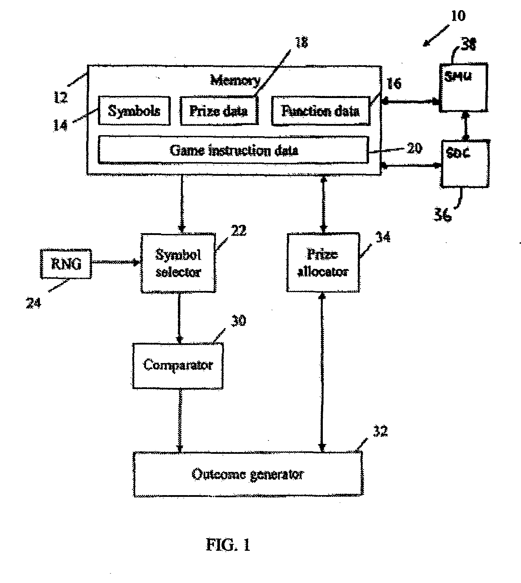

Referring to Figure 1, a gaming system 10 for implementing an electronic embodiment of the game is shown in diagrammatic form. The gaming system 10 comprises a memory 12 arranged to store symbols data 14 indicative of a plurality of symbols for selection and display to a player during a game, function data 16 indicative of one or more functions associated with one or more of the symbols, prize data 18 indicative of prize amounts of the game, and game instruction data 20 indicative of game instructions usable by the gaming machine 10 to control operation of the game. The gaming system 10 operates under the control of software, including game software.

The software may be configured to control the gaming system so as to comprise a symbol selector 22 which is arranged to select one or more symbols used to determine the outcome of the game. A random number generator 24 may be use to determine which symbols the symbol selector 22 selects.

The software may also configure the gaming system 10 to also comprise a comparator 30 arranged to compare the related symbols in accordance with the game instruction data 20, and an outcome generator 32 which in accordance with the game instruction data 20 determines whether the player is successful or unsuccessful and therefore wins a prize or not.

While in this example the comparator and the outcome generator are shown as separate components, it will be understood that the functions of the outcome generator and the comparator may be implemented by one component.

The software may configure the gaming system 10 to also comprise a prize allocator 34 which communicates with the prize data 18 stored in the memory 12 and with the outcome generator 30, and determines an appropriate prize to allocate to a player depending on the outcome of the game and in some embodiments depending on the related symbols selected by the symbol selector 22.

In the embodiment described below, the symbol selector 22, the comparator 30, the prize allocator 34 and the outcome generator 30 are implemented using a microprocessor and programs of the software controlled by one or more computers.

The gaming system 10 can take a number of different forms. In a first form it may operate as a stand alone gaming machine wherein all or most components required for implementing the game are present in a player operable gaming machine.

In a second form, a distributed architecture is provided
wherein some of the components required for implementing the game are present in a player operable gaming machine and some of the components required for implementing the game are located remotely relative to the gaming machine. For example, a "thick client" architecture may be used
wherein part of the game is executed on a player operable gaming machine and part of the game is executed remotely, such as by a gaming server; or a "thin client" architecture may be used wherein most of the game is executed remotely such as by a gaming server and a player operable gaming machine is used only to display audible and/or visible gaming information to the player and receive gaming inputs from the player.

However, it will be understood that other arrangements are envisaged. For example, an architecture may be provided
wherein a gaming machine is networked to a gaming server and the respective functions of the gaming machine and the gaming server are selectively modifiable. For example, the gaming system may operate in stand alone gaming machine mode, "thick client" mode or "thin client" mode depending on the game being played, operating conditions, and so on. Other variations will be apparent to persons skilled in the art.

The gamine machine 10 is networked for downloading of the software to control its operation. The software may be any of a number of different levels. For example the software may be a BIOS, hardware component firmware, operating system, shell, gaming application, gaming application module or upgrades to any of these. The gaming machine 10 has a software distribution client 36 operable on the memory 12 for downloading the software or updates to the software from the network as described further below. The gaming machine 10 also has a software maintenance unit 38 operable on the memory 12 and software distribution client 36 for managing the downloading by the software distribution client 36 and for managing installation of downloaded software as described further below.

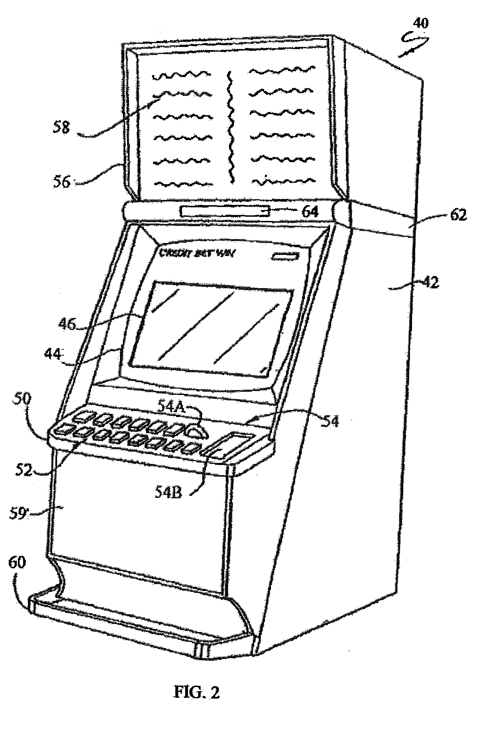

A gaming system in the form of a stand alone gaming machine 40 is illustrated in Figure 2. The gaming machine 40 includes a console 42 having a display 44 on which is displayed representations of a game 46 that can be played by a player. A mid-trim 50 of the gaming machine 40 houses a bank of buttons 52 for enabling a player to interact with the gaming machine during gameplay, including enabling the player to select the bet amount and to receive other inputs. The mid-trim 50 also houses a credit input mechanism 54 which in this example includes a coin input chute 54A and a bill collector 54B. Other credit input mechanisms may also be employed, for example, a card reader for reading a smart card, debit card or credit card. A reading device may also be provided for the purpose of reading a player tracking device, for example as part of a loyalty program. The player tracking device may be in the form of a card, flash drive or any other portable storage medium capable of being read by the reading device.

A top box 56 may carry artwork 58, including for example pay tables and details of bonus awards and other information or images relating to the game. Further artwork and/or information may be provided on a front panel 59 of the console 42. A coin tray 60 is mounted beneath the front panel 59 for dispensing cash payouts from the gaming machine 30.

The display 44 is in the form of a video display unit, particularly a cathode ray tube screen device. Alternatively, the display 44 may be a liquid crystal display, plasma screen, any other suitable video display unit. The top box 56 may also include a display, for example a video display unit, which may be of the same type as the display 44, or of a different type. The display may comprise a touch screen usable by a player to interact with the gaming machine in particular during game play.

A player marketing module (PMM) 62 having a display 64 is connected to the gaming machine 10. The main purpose of the PMM 62 is to allow the player to interact with a player loyalty system. The PMM has a magnetic card reader for the purpose of reading a player tracking device, for example as part of a loyalty program. However other reading devices may be employed and the player tracking device may be in the form of a card, flash drive or any other portable storage medium capable of being read by the reading device. In this example, the PMM 62 is a Sentinel III device produced by Aristocrat Technologies Pty Ltd.

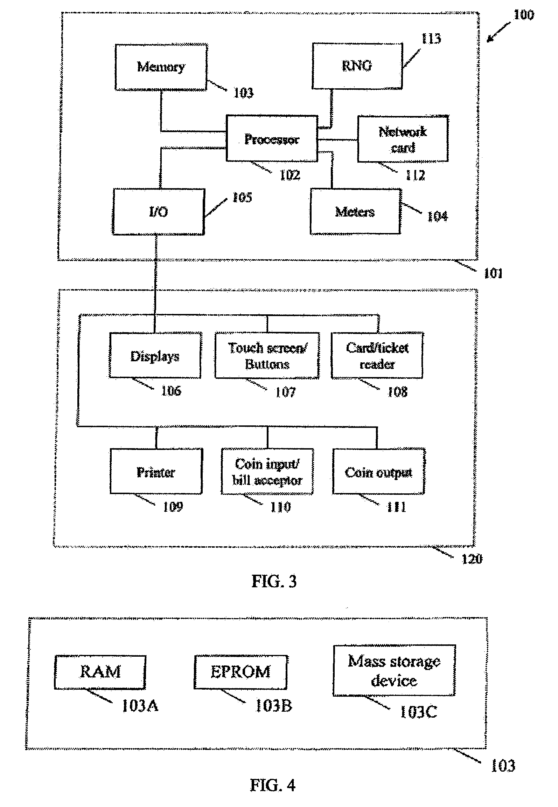

Figure 3 shows a block diagram of operative components of a typical gaming machine 100 which may be the same as or different to the gaming machine shown in Figure 2.

The gaming machine 100 includes a game controller 101 having a processor 102. Instructions in the form of software and data to control operation of the processor 102 in accordance with the present invention are stored in a memory 103 which is in data communication with the processor 102.

Typically, the gaming machine 100 will include both volatile and non-volatile memory and may include more than one of each type of memory, with such memories being collectively represented by the memory 103.

The instructions include instructions for controlling the processor to operate as a software distribution client for downloading the software or updates to the software from the network as described further below. The instructions also include instructions for controlling the processor to operate as a software maintenance unit as described further below.

Figure 4 shows a block diagram of the main components of an exemplary memory 103. The memory 103 includes RAM 103A, EPROM 103B and a mass storage device 103C. The RAM 103A typically temporarily holds software in the form of program files for execution by the processor 102 and related data to control the operation of the gaming machine 100. The EPROM 103B may be a boot ROM device and/or may contain some system or game related code. The mass storage device 103C is typically used to store game programs, the integrity of which may be verified and/or authenticated by the processor 102 using protected code from the EPROM 103B or elsewhere, and data indicative of symbols, prize amounts and symbol functions used in the game.

The gaming machine has hardware meters 104 for purposes including ensuring regulatory compliance and monitoring player credit, an input/output (I/O) interface 105 for communicating with a player interface 120 of the gaming machine 100, the player interface 120 having several peripheral devices. The input/output interface 105 and/or the peripheral devices may be intelligent devices with their own memory for storing associated instructions and data for use with the input/output interface or the peripheral devices. A random number generator module 113 generates random numbers for use by the processor 102.

In the example shown in Figure 3, the peripheral devices that communicate with the game controller 101 comprise one or more displays 106, a touch screen and/or bank of buttons 107, a card and/or ticket reader 108, a printer 109, a bill acceptor and/or coin input mechanism 110 and a coin output mechanism 111. Additional hardware may be included as part of the gaming machine 100, or hardware may be omitted as required for the specific implementation.

In addition, the gaming machine 100 includes a communications interface, for example a network card 112. The network card may, for example, send status information, accounting information or other information to a central controller, server or database and receive data or commands from the central controller, server or database. The communications interface provides a network connection for downloading of software or updates to software.

It is also possible for the operative components of the gaming machine 100 to be distributed, for example input/output devices 106,107,108,109,110,111 may be provided remotely from the game controller 101.

The gaming system includes a network, which for example may be an Ethernet network, a LAN or a WAN. In this example, banks of two or more gaming machines are connected to the network.

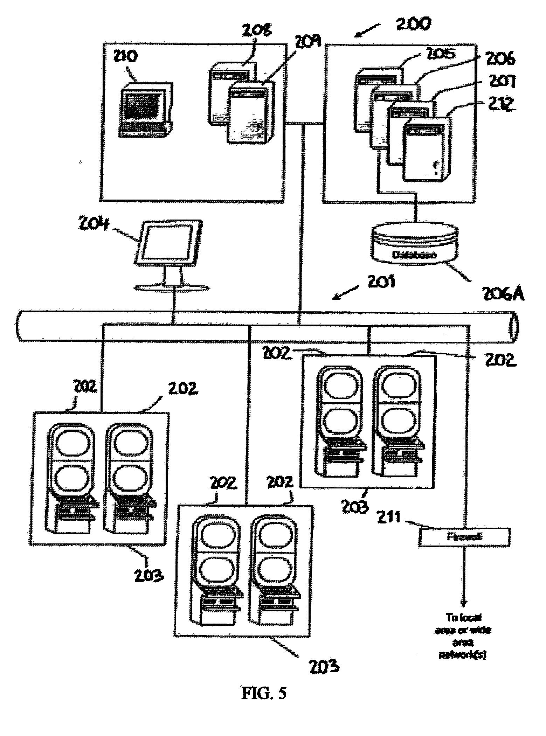

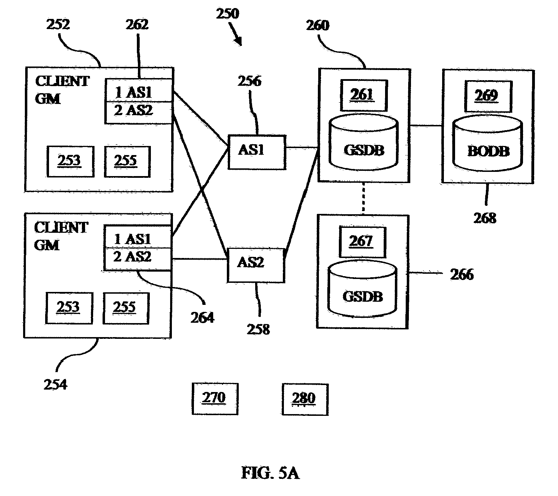

Figure 5 shows a gaming system 200 in accordance with an embodiment. The gaming system 200 includes a network 201, which for example may be an Ethernet network, a LAN or a WAN. In this example, three banks 203 of two gaming machines 202 are connected to the network 201. The gaming machines 202 provide a player operable interface and may be the same as the gaming machines 10,100 shown in Figures 2 and 3, or may have simplified functionality depending on the requirements for implementing game play. While banks 203 of two gaming machines are illustrated in Figure 5, banks of one, three or more gaming machines are also envisaged.

One or more displays 204 may also be connected to the network 201. The displays 204 may, for example, be associated with one or more banks 203 of gaming machines. The displays 204 may be used to display representations associated with game play on the gaming machines 202, and/or used to display other representations, for example promotional or informational material.

In a thick client embodiment, a game server 205 implements part of the game played by a player using a gaming machine 202 and the gaming machine 202 implements part of the game. With this embodiment, as both the game server 205 and the gaming machine 202 implement part of the game, they collectively provide a game controller. A database management server 206 may manage storage of game programs and associated data for downloading or access by the gaming devices 202 in a database 206A. Typically, if the gaming system enables players to participate in a Jackpot game, a Jackpot server 207 will be provided to monitor and carry out the Jackpot game.

In a thin client embodiment, the game server 205 implements most or all of the game played by a player using a gaming machine 202 and the gaming machine 202 essentially provides only the player interface. With this embodiment, the game server 205 provides the game controller. The gaming machine will receive player instructions, and pass the instructions to the game server which will process them and return game play outcomes to the gaming machine for display. In a thin client embodiment, the gaming machines could be computer terminals, e.g. PCs running software that provides a player interface operable using standard computer input and output components.

Servers are also typically provided to assist in the administration of the gaming system 200, including for example a gaming floor management server 208 and a licensing server 209 to monitor the use of licenses relating to particular games. An administrator terminal 210 is provided to allow an administrator to monitor the network 201 and the devices connected to the network.

The gaming system 200 may communicate with other gaming systems, other local networks such as a corporate network, and/or a wide area network such as the Internet, for example through a firewall 211.

The gaming system 200 may also include a loyalty program server.

Persons skilled in the art will appreciate that in accordance with known techniques, functionality at the server side of the network may be distributed over a plurality of different computers. For example, elements may be run as a single "engine" on one server or a separate server may be provided. For example, the game server could run a random number generator engine. Alternatively, a separate random number generator server could be provided.

In the present embodiment, the gaming system 10 is arranged to display virtual symbols using a video graphical display device, although it will be understood that other arrangements are envisaged.

Each machine, such as gaming machines 202, or server 205, 206, 207, 208, 209, 212 or terminal 210 or firewall 211, comprises a software distribution client of a software distribution system. One of the servers, for example 212, is configured to operate as the software distribution server of a software distribution system. The software distribution system is preferably implemented by means of a product that provides general functions for software distribution, whereas functionality and knowledge for handling a complex software structure and a complex gaming system structure is implemented in the software maintenance system.

Each machine (202, 205, 206, 207, 208, 209, 212, 210 or 211) also comprises a software maintenance control unit of a software maintenance system of an embodiment of the present invention. One of the servers is configured to operate as a software maintenance server of a software maintenance system of an embodiment of the present invention. In this embodiment the server 212 may be used, although it may be a discrete server to the software distribution server.

The software maintenance server is arranged to receive a software package for updating one or more target machines e.g. 202, 205-211. The software maintenance server defines tasks of the software distribution system, including defining target machines for download of the software package, and providing the tasks and software package to the software distribution system. Software maintenance units are provided for each software distribution client/server for acting as an interface between the software maintenance server and each software distribution part. Each software maintenance unit is configured to control downloading of the software package to a target machine by the software distribution system.

One machine, such as terminal 210, is configured to operate as a software maintenance client of the software maintenance system of an embodiment of the present invention. The software maintenance client acts as an operator interface to the software maintenance system.

The software distribution system is provided in parallel with and embedded behind the software maintenance system. The software distribution clients as well as the software distribution server are controlled by the software maintenance system via the software maintenance control units.

Figure 5A shows schematically an example client/server based gaming system 251 in accordance with an embodiment of the present invention. A first client gaming machine 252 is communicatively coupled to a first game application server AS1 256 and to a second game application server AS2 258. The first and second game application servers are in their turn communicatively coupled to a game server database 260 comprising a database application logic layer 261 and a database storage structure GSDB. Communicatively coupled in this context means that there is provided a communication link over which information signals can be communicated between two coupled units, for example in the form of messages or data streams. The communication link can for example be continuously activated in an on-line state or be activated on request when a message is communicated. The message may for example be in the form of a request or a response. In a simple form the gaming system in accordance with the invention comprises a single client gaming machine, at least one game application server and a game server database.

The game software may be divided into a client game module and a server game module with access to a central database. In order to run a game the client game module must be associated with and use functions available at a server game module. When a game is played via a client gaming machine, a game session is established and game session data is generated in the course of the game. Each game session has a specific identity and is assigned a game session identity code. The game session data is stored in the game server database associated with the game session identity code and in some embodiments also with a reconnect identity code. The game session data comprises all the data that is necessary to reconstruct a game session as a whole or up to a certain point with the same result, outcome and output as the original game session.

In the example of Figure 5A there is also a second client gaming machine 254 that similarly is communicatively coupled to the first and second game application servers. The client gaming machines 252 and 254 are provided with means 262 and 264, respectively, for selecting one game application server to communicate with according to predetermined rules of priority and for directing the communication according to these rules. The client gaming machines 252, 254 are further provided with a mechanism 253 devised to determine dependent on predetermined receiving capability rules whether a response is capable of being or possible to be received from the game application server within a predetermined receiving condition. The receiving condition is in one embodiment receipt within a selectable predetermined amount of time. In this case the predetermined amount of time can be coordinated with a normal function of timeout of predetermined accepted response time, for example such that the time of the receiving condition is shorter than the accepted response time that is configured for the client gaming machine so that the game session can be preserved on the client side during the operation time for the failover and takeover operations. In another embodiment the receiving condition is a predetermined dependency on a status parameter, for example a parameter that describes the status of the communication link, the game server, some other functionality or control parameter of the gaming system. In a further embodiment, the receiving condition is dependent on a predetermined quality of response from the game application server, for example the response may be erroneous or inconsistent with the request, or may communicate a request from the server side to trigger a takeover by a different game application server for example due to maintenance. The request to trigger a takeover may also have the form of a switch off signal or a command to a game application server or a game server database.

The client gaming machines 252, 254 further preferably comprises means 255 devised to initiate re-transmit of a request in response to negative receiving capability being determined, and to initiate selecting and re-directing to a different game application server.

The direction priority rules are used to establish communication of the client gaming machine with the game application server that has the highest priority. If such communication fails, the client gaming machine tries to communicate with the game application server that has the next level of priority and so on. In this example the first client gaming machine 252 is adapted to communicate with the first game application server 256 with first priority and with the second game application server 258 with second priority. Conversely, the second client gaming machine 254 is adapted to communicate with the second game application server 258 with first priority and with the first game application server 256 with second priority. In this manner the client gaming machines have alternative game application servers to communicate with in case the communication path or the first selected game application server for some reason are inoperative for the purpose of the client gaming machine.

The game application servers 256, 258 are coupled to a game server database 260, which may be a common game server database 260 as shown in Figure 5A or separate game server databases. However, in a system with failover and takeover capability there is provided at least one reserve game server database 266, comprising a database application logical layer 267 and a game server database storage structure GSDB, adapted to be switched into communicative coupling with the game application servers to substitute a first game server database for example in case of operational failure or when it is intentionally taken out of operation. The game server database 260, 267 is further communicatively coupled to a back office database 268, similarly comprising a database application logic layer 269 and a database storage structure BODB.

The information stored in the game server database has a transactional nature and inter alia comprises information pertaining to game sessions, game session data, game session identity, client gaming machine identity, etc as the game sessions are operated and executed. This information is preferably cached, i.e. temporarily stored, in the game server database and is continuously or intermittently transmitted and stored in the back office database, and then deleted from the game server databases. The back office database is thus used to store selections of historical data from the transactions, possibly in a different format than in the game application server.

The client/server based gaming system may also comprise a load balancer communicatively coupled with groups of client gaming machines and a plurality of game application servers for distributing the game application load among the game application servers as described in W02007/133124, which is incorporated herein by reference.

Each machine, such as client gaming machines 252 and 254, game application server 256 and 258, database 260 and 266, and BODB 268, comprises a software distribution client of a software distribution system. In some embodiments the game application server may be implemented on one or more machines which also implement the databases 260 and 266.
It is preferred to that there be a software distribution client for each machine, so that the software distribution client can distribute software to the machine. A machine can be a physical machine or a logical machine. Another server 270 is for example configured to operate as the software distribution server of the software distribution system. The software distribution system is preferably implemented by means of a product that provides general functions for software distribution, whereas functionality and knowledge for handling a complex software structure and a complex gaming system structure is implemented in the software maintenance system.

Each machine (252, 254, 256, 258, 260, 266, 268 or 270) also comprises a software maintenance control unit of the software maintenance system of an embodiment of the present invention. A server 280 is configured to operate as a software maintenance server of a software maintenance system of an embodiment of the present invention.

The software maintenance server 280 is arranged to receive a software package for updating one or more target machines, e.g. 252, 254, 256, 258, 260, 266, 268 or 270. The software maintenance server 280 defines tasks of the software distribution system, including defining target machines for download of the software package, and providing the tasks and software package to the software distribution system.

The software maintenance server 280 may comprise a terminal configured to operate as an operator interface to the software maintenance system.

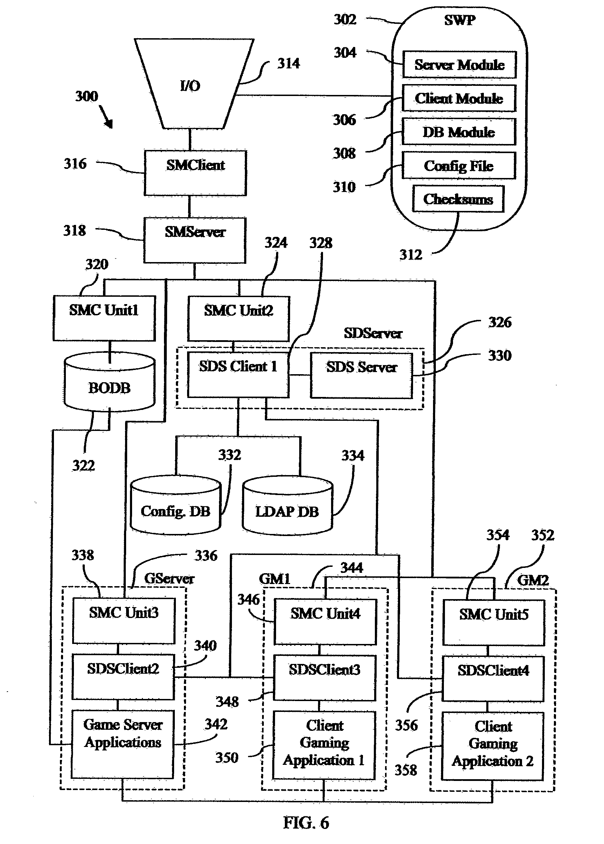

Referring to Figure 6, an example embodiment of the present invention is shown applied to a client-server based gaming system, which comprises a central database, here shown as a back office database (BODB) 322 communicatively coupled to game application server (Gserver) 336, which in its turn is communicatively coupled to a plurality of client gaming machines 344 and 352.

Figure 6 shows the present invention in the form of a software component update system 300 for downloading a software package (SWP) 302 to one or more networked systems including the GServer 336, a first gaming machine (GM1) 344, a second gaming machine (GM2) 352 and the BODB 322. The update system 300 may also be implemented in the previously described embodiments. The update system 300 comprises a software management system as a layer interleaved with the gaming system. The software maintenance system comprises a software maintenance server 318 for controlling software maintenance. The software management system further comprises a plurality of software maintenance units, in this embodiment comprising SMC unit1 320, SMC unit2 324, SMC unit3 338, SMC unit4 346, and SMC unit5 354. The SMServer 318 is configured to interact with SMC unit1 320, SMC unit2 324, SMC unit3 338, SMC unit4 346, and SMC unit5 354.

The software management system further comprises software maintenance client (SMclient) 316 having input/output 314. Input/output 314 is arranged to receive the SWP 302.

The update system 300 further comprises a software distribution system as an interleaving layer and embedded behind the software maintenance system. The software distribution system comprises a plurality of parts, including a software distribution server (SDServer) 326 and a plurality of software distribution system clients, comprising SDSClient2 340, SDSClient3 348, and SDSClient4 356. The SDserver 326 comprises a software distribution system server service (SDS Server) 330 and a software distribution system client (SDSClient1) 328. The SDS server 330 interacts with SDSClient2 340, SDSClient3 348, and SDSClient4 356. The SDSClient1 328 accesses a configuration database (Config. DB) 332 and a lightweight directory access protocol database (LDAP DB) 334.

The GServer 336 has installed game server applications 342, which access the BODB 322. The GServer 336 also interacts with client gaming applications 350 and 358 of the GM1 344 and GM2 352, respectively. The BODB 322 comprises a database used to maintain up-to-date information regarding which kind of software is installed and their current versions.

The SMS server 318 defines tasks of the software distribution system, including defining target machines for download of the software package. The SMS server 318 also provides the tasks and SWP 302 to the software distribution system.

The software maintenance units 320, 324, 338, 346 and 354 each act as an interface between the SMServer 318 each SDSClient. Each software maintenance unit is configured to control downloading of the software package to a target machine by the software distribution system. Each software maintenance unit is also configured to manage the installation of downloaded software package components at the respective target machine.

The SDS server 330 is configured to distribute one or more components of the SWP 302 to one or more target machines. Each software distribution client 340, 348 and 356 manages receipt of software package components from the SDS server 330.

The software distribution system is, for example, a third party product, such as Hewlett Packard's *Openview Configuration Management,* that is controlled by the SMServer 318 through the software maintenance control units, 320, 324, 338, 346 and 354. Other third party products for software distribution may be used instead, such as IBM's *Tivoli, Oracle Enterprise Manager,* or Open *NMS.* Other software distribution systems may be used.

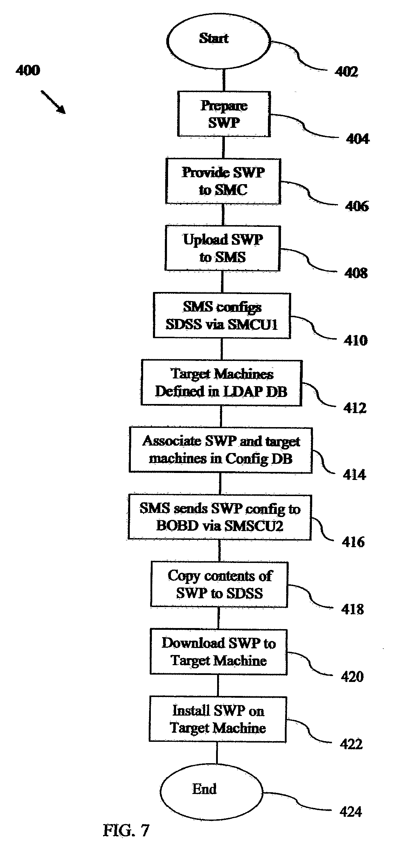

Referring to Figure 7, an example of the process 400 of the software distribution is shown starting at 402.

Game software (SWP 302) is received from a software supplier, such as internal game supplier or an external third party game supplier. In this embodiment the software package 302 comprises a server module 304, a client module 306, a database module 308, a configuration file 310 and one or more checksums 312. The server module 204 typically realizes the logical parts of a game. The client module 306 typically realizes the presentation parts of a game. The database module 308 comprises information about the game.

The game software may be certified according to an established procedure. In this case the SWP 302 is prepared 404 by steps comprising:
compressing the game software components into, for example, zip-files;
calculating a checksum 312 for each component - the checksums 312 are used to verify that the software that has been certified is identical to the distributed software in later stages;
compiling the configuration file 310 that describes the game software in terms of content and game parameters.

The SWP 302 is delivered 406 to a customer, such as the owner or operator of a gaming system via the SMClient 316. The SWP 302 may be in the form of computer logic embodied in computer readable media such as a memory, flash drive, CD, DVD, floppy disk, hard disk drive, network accessed storage or some other suitable means.

A user of the SMClient 316 can then select the SWP 302 for distribution, and can set which gaming system nodes (client gaming machines, game application servers or other system unit e.g. site controller) are selected.

A first task is defined for the set of clients and a second task is defined for the set of game application servers that are targets for a game package installation.

The SWP 302 is then uploaded 408 to the SMServer 318 from the SMClient 316 together with control information (sets, start/stop time).

The SMServer 318 verifies the contents of the SWP 302 by calculating a checksum for each module 304, 306, 308 and in an embodiment the file 310. The calculated checksums are compared to the respective checksums 312 in the SWP 302. Information that the checksums are correct is communicated back to the SMClient 316. In case the checksums are not correct, this fact is communicated back to the SMClient 316 and the software distribution process is interrupted.

The SMServer 318 configures 410 the SDSServer 330. Communication between the SMServer 318 and the SDSServer 330 is via the software maintenance unit SMCUnit2 324 and SDC client1 328. These communications may be in the form of a signal send over the network.

The target machines 336, 344, or 352 (and in some embodiments BODB 322) for the SWP 302 update are defined 412 and stored in the LDAP DB 334. An association between the SWP 302 and the relevant modules therein to be distributed and target node machines is defined and stored 414 in the Config. DB 332.

A definition of the package compiled by means of information in the configuration file 310 is communicated 416 from the SMServer 318 to the SMC Unit1 320 and is stored in the BODB 322.

The SWP 302 components to be updated are copied 418 to the SDSServer 330. In an embodiment the SMServer 318 instructs the SDSServer 330 to construct new packages from the extracted files, i.e. each zip-file and matching signature-file are combined into a download package according to the definition provided to the SDSServer 330 and stored in the LDAP DB 334. The instructions may be in the form of a signal sent over the network.

The components of the SWP 302 are downloaded 420 to the target machines by the software distribution system, as explained in more detail below. The downloaded components are installed 422 on the target machines by the respective SMC Unit of software maintenance system, as explained in more detail below. The distribution and installation is then complete at 424.

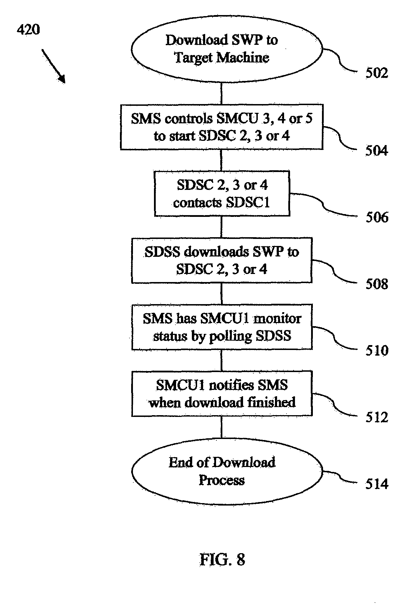

The downloading process 420 is described in more detail in relation to Figure 8. For each machine requiring a download the process commences at 502. The SMServer 318 controls the respective SMCUnit (3, 4 or 5) 338, 346 or 354 of the selected machine(s) to start 504 the respective SDSClient (2, 3, or 4) 340, 348 or 356, via control messages. For example if GM1 344 requires the update, then the SMServer 318 controls the SMCUnit4 346 to start the SDSClient3 348. The control messages may be in the form of a signal sent over the network.

The SDSClient3 348 makes contact and establishes 506 a communication coupling with the SDSClient1 328 and the SDSServer 330. The communication coupling may comprise control messages carried on the form of a signal sent over the network. The SDSClient1 328 checks if an update is available by checking for an association between the contacting client gaming machine 344 in the configuration database 332. Download 508 of the software components (i.e. files of the client module and related checksums) is started by the compressed files being transferred to the SDSClient3 348 and saved in a download directory on the GM1 344.

The status of the download is monitored 510 by the SMServer 318 by polling the SDSServer 330 via the SMCUnit 2 324 for a status parameter and thereby detects 512 when the download is complete. In case of an error an error status message is detected and error handling is executed by the SDSServer 330 or an appropriate alarm is triggered. The download process is then concluded 514. Polling and status messages may be in the form of a signal sent over the network.

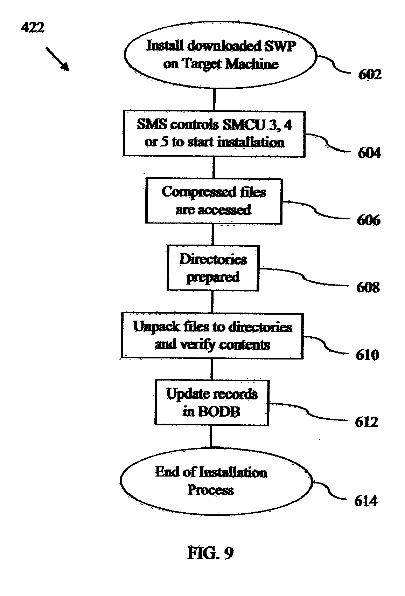

The installation process 422 is described in more detail in relation to Figure 9. For each machine requiring installation the process commences at 602. The SMServer 318 controls, via the SMCUnit 4 346, installation 604 of the downloaded components of the SWP 302. The installation procedure comprises the steps of:
- accessing 606 the compressed files of the download directory of the GM1 344 to determine the directory structure required for the downloaded files;
- preparing 608 the directory structure. (For example, the previous game file directory is copied to a new game version directory and the patch files are added and possibly obsolete files are discarded. In the case of a complete new installation, a new directory is created.);
- unpacking 610 the compressed files from the download directory to the directory structure on the GM1;
- verifying 610 the unpacked files by means of the likewise unpacked checksums to check that the received files exactly correspond to those that are certified. If there is a mismatch an error message is generated;
- notifying 612 that installation is ready by a message from the SMCUnit4 346 to the SMServer 318.

The software components may be encrypted, in which case the installation process may also involve decrypting the files by use of a decryption key. The SMServer 318 stores 612 in the BODB 322 a definition of the coupling of a game to the client gaming machine in which the game has been installed. The installation process is then concluded at 614.

In the example of the GServer 336 requiring updates to the Game Server Application 342, the SMSserver 318 controls the SMC Unit 3 338 to start the SDSClient 340. The SDSClient2 340 makes contact and establishes a communication coupling with the SDSClient1 328 and the SDSServer 330. The communication coupling may covey messages, which may be in the form of a signal send over the network.

The SDSClient1 328 checks the association between the GServer 336 in the configuration database 332 and any software updates. As mentioned above the updates will be present if the SMServer caused the SDSServer 330 to update the config. DB 332 in the event that new updates were provided to the SMClient 316.

Download of the software components (i.e. files of the server module 304 and related checksums) is started and the compressed files are copied to the download directory by the SDSClient 2 340 from the SDS Server 330. The status of the download is monitored by the SMServer 318, again by polling the SDSServer 330 via the SMC Unit 2 324 for a status parameter and thereby detects when the download is complete.

Once the updates are downloaded the SMServer 318 controls via the SMCUnit3 338 to install the software. The installation procedure is similar to that of the Game Machines. The SMCUnit3 338 will inform the SMServer 318 that the installation is complete. The SMServer 318 stores in the BODB 322 a definition of the coupling of a game to the Gserver 336 in which the game has been installed via SMC Unit 1 320.

Download directories and couplings in the software distribution system server, clients and databases are cleaned under the control of the SMServer 318 via the software maintenance control units. The newly installed game is released for access to players according to pre-settable rules. This may be achieved by updating entries in the LDAP DB 334, so that the next time the software distribution clients check for an update the temporary files are deleted.

The machine GServer 336, GM1 344 or GM2 352 may need to be restarted by the SMC unit.-

The update system 300 can also be used for uninstalling of software with an appropriately adapted reversed process.

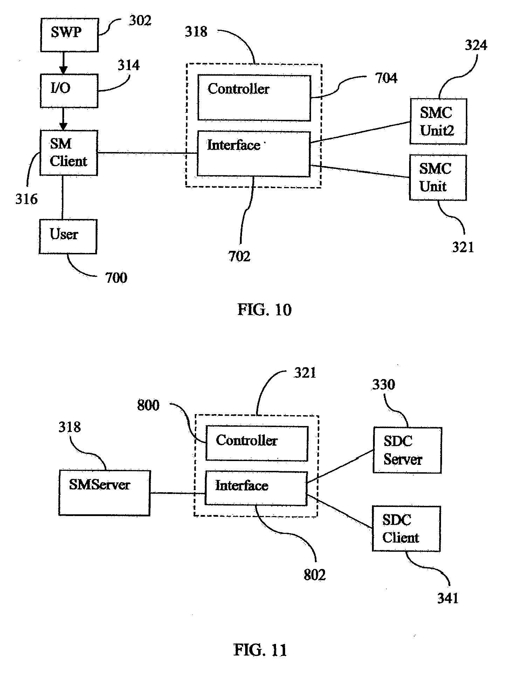

Referring to Figure 10, an embodiment of the software maintenance server 318 is described. The software maintenance server 318 comprises an interface 702 for receiving the SWP 302 from the SM Client 316, via the I/O 314, and for receiving from the SM Client 316 a definition of at least target machines for download of the SWP 302 and in some embodiments the tasks for distribution of the SWP 302. The interface may for example receive a file or folder location, or the file or files of the SWP 302. The interface may for example receive the definition and tasks from a user 700 or the definition and tasks may be in the form of a data file comprising the defined target machines and the tasks fore the software distribution system to perform.

The interface 702 provides the SWP 302 to the software distribution system and in a particular embodiment provides the SWP 302 to the SDS Server 330, via the SMC Unit2 324 and SDS Client 1. The interface 702 also communicates with each other software distribution client through the respective software maintenance unit (SMU) (collectively the SMUs are referred to as 321).

The software maintenance server 318 also comprises a controller 704 for controlling each software maintenance unit 321 to in turn control the respective software distribution part to achieve distribution of the SWP 302 to a respective one of the one or more target machines via the respective software distribution client.

Referring to Figure 11, a SMU 321 implemented on a target machine or a software distribution server machine is shown in more details. The SMU 321 comprises a controller 800 arranged to control a respective one of the software distribution parts. In the case of the SMU 321 being implemented on a target machine, the controller 800 controls the respective software distribution client 341. In the case of the SMU 31 be implemented on the software distribution server machine, the controller 800 controls the software distribution server 330 via the SDS Client 1 328.

The SMU 312 also comprises an interface 802 to the software maintenance server 318 and the software distribution part 330 or 341. The controller 800 is configured to be controlled by the software maintenance server 318 so as to in turn control the software distribution part 330 or 341 to achieve distribution of the SWP 302 to the target machines using the respective software distribution client to receive the software package at the target machine under the control of the software maintenance server 318.

The present invention may have some of the following advantages:
- the maintenance and distribution of complex software structures in a complex gaming system can be more automated;
- the software distribution system can be more easily changed by adapting of the communication interface between the software maintenance system and the software distribution system. In contrast, if only the software distribution system would be used it would require very complex configurations that are not readily available in commercially available products;
- the present invention has broad application in software maintenance beyond the example of a gaming system.

Modifications and variations as be apparent to a skilled addressee are deemed to be within the scope of the present invention.

## Claims

1. A software maintenance system for managing a software distribution system for distributing a software package to one or more target machines, the software distribution system comprising a plurality of software distribution parts, wherein at least one of the software distribution parts is provided at each target machine for receiving the software package, the software management system comprising:
a software maintenance server for receiving a software package for updating one or more target machines, the software maintenance server configured to:
define at least target machines for download of the software package; and
provide the software package to the software distribution system; and
at least one software maintenance unit for each software distribution part for acting as an interface between the software maintenance server and each software distribution part, each software maintenance unit configured to control the respective software distribution part to achieve distribution of the software package to each target machine via the respective software distribution part.

2. A system according to claim 1, wherein the software package comprises one or more software components.

3. A system according to claim 2, wherein the software maintenance server is configured to define the content of the software package in respect to one or more of the target machines.

4. A system according to any one of claims 1 to 3,
wherein each software maintenance unit is configured to manage installing of the components of the downloaded software package at the respective target machine.

5. A system according to any one of claims 1 to 4,
wherein the software maintenance server configured to monitor the progress of the distribution of the software package by the software distribution system.

6. A system according to any one of claims 1 to 5,
wherein the software maintenance server configured to:
define a plurality of tasks for the software distribution system to undertake so as to distribute and install the software package to the defined target machines; and
control the software distribution system to undertake the plurality of tasks so as to achieve distribution and installation of the software package to each target machine.

7. A software management system comprising:
a software distribution system for distributing a software package to one or more target machines, the software distribution system comprising a plurality of software distribution parts, wherein at least one of the software distribution parts is provided at each target machine for receiving the software package;
a software maintenance server for receiving a software package for updating one or more target machines, the software maintenance server configured to:
define at least one target machine for download of the software package; and
provide the software package to the software distribution system; and
at least one software maintenance unit for each software distribution part for acting as an interface between the software maintenance server and each software distribution part, each software maintenance unit configured to control the respective software distribution part to achieve distribution of the software package to each target machine via the respective software distribution part.

8. A system according to any one of claim 7, wherein the parts of the software distribution system comprise:
a software distribution server for distributing one or more components of a software package to one or more target machines; and
at least one software distribution client at each target machine for managing receipt of software package components from the software distribution server.

9. A system according to claim 8, wherein the software maintenance server is configured to provide the software package to the software distribution server for distribution to one or more software distribution clients according to the defined target machines under the control of the respective software maintenance units.

10. A method of distributing a software package comprising a plurality of software components to one or more target machines comprising:
receiving a software package for updating one or more target machines;
defining at least target machines for download of the software package with a software maintenance system;
providing the software package to a software distribution system comprised of a plurality of parts,
wherein each part is used by one of a plurality of potential target machines for downloading of a given software package to the respective machine;
controlling selected software distribution system parts with the software maintenance system to download the software package to a required one or more target machines.

11. A method according to claim 10, further comprising:
defining a plurality of tasks for the software distribution system to undertake so as to distribute and install the software package to the defined target machines with the software maintenance system; and
controlling the software distribution system parts with the software maintenance system to undertake the plurality of tasks so as to achieve distribution and installation of the software package to each target machine.

12. A method according to either claim 10 or 11, wherein there is a software maintenance unit corresponding to each of the selected software distribution system parts and each software maintenance unit interfaces a software maintenance server to each software distribution part so as to control each software distribution part to achieve distribution of the software package to each target machine.

13. Logic embodied in a machine readable form comprising instructions to control a machine or machines to operate as a software maintenance system for managing a software distribution system for distributing a software package to one or more target machines, the software distribution system comprising a plurality of software distribution parts, wherein at least one of the software distribution parts is provided at each target machine for receiving the software package, the software maintenance system comprising:
a software maintenance server for receiving a software package for updating one or more target machines, the software maintenance server is configured to:
define at least target machines for download of the software package; and
provide the software package to the software distribution system; and
at least one software maintenance unit for each software distribution part for acting as an interface between the software maintenance server and each software distribution part, each software maintenance unit configured to control the respective software distribution part to achieve distribution of the software package to each target machines via the respective software distribution part.

14. Logic embodied in a machine readable form comprising instructions to control a machine or machines to:
receive a software package for updating one or more target machines;
define at least target machines for download of the software package with a software maintenance system;
provide the tasks and software package to a software distribution system comprised of a plurality of parts,
wherein each part is used by one of a plurality of potential target machines for downloading of a given software package to the respective machine;
control selected software distribution system parts with the software maintenance system to download the software package to a required one or more target machines.

15. The logic of claim 13 or 14, wherein the logic is in the form of a computer program.

16. The logic of claim 13 or 14, wherein the logic is in the form of a data signal.

17. A software maintenance server for managing a software distribution system for distributing a software package to one or more target machines, the software distribution system comprising a plurality of software distribution parts, wherein at least one of the software distribution parts is provided at each target machine for receiving the software package, the software management server comprising:
an interface for receiving a software package for updating one or more target machines, defining at least target machines for download of the software package, providing the software package to the software distribution system and communicating with each software distribution part through at least one software maintenance unit;
a controller for controlling each software maintenance unit to in turn control the respective software distribution part to achieve distribution of the software package to a respective one of the one or more target machines via the respective software distribution part.

18. A software maintenance unit for controlling parts of a software distribution system for distributing a software package to one or more target machines, wherein at least one of the software distribution parts is provided at each target machine for receiving the software package, the software management unit being implemented on a target machine and comprising:
a controller arranged to control a respective one of the software distribution parts;
an interface to a software maintenance server and the software distribution part;
wherein the controller is configured to be controlled by the software maintenance server so as to in turn control the software distribution part to achieve distribution of a software package to the target machine using the software distribution part to receive the software package at the target machine under the control of the software maintenance server.
